# DEMANDE DE BREVET EUROPEEN

(11) **EP 0 662 335 A1**
(43) Date de publication de la demande: **12.07.1995**
(21) Numéro de dépôt: 94403020.4
(22) Date de dépôt: 26.12.1994
(51) Int. Cl.: B01D 21/24

(54) **Perfectionnements apportés aux goulottes de reprise de liquide, notamment pour decanteurs**

(30) Priorité: 07.01.1994 FR 9400111
(71) Demandeur: DEGREMONT, F-92508 Rueil-Malmaison Cédex (FR)
(72) Inventeur: Perrin, Didier, F-95240 Cormeilles en Parisis (FR); Virecoulon, Jean-Pierre, F-92500 Rueil Malmaison (FR)
(74) Mandataire: Armengaud Ainé, Alain

(57) **Abrégé**

Goulotte de reprise de liquide, notamment d'eau décantée dans un appareil de décantation caractérisée en ce qu'elle est réalisée de manière à servir de support à des éléments de couverture (20). Selon une réalisation de cette goulotte, chacune de ses parois latérales longitudinales au travers desquelles sont ménagées les ouvertures de déversement du liquide décanté, se prolonge par un pan (18, 18') rabattu perpendiculairement à ladite paroi, de manière à délimiter à la partie supérieure de ladite goulotte (10) deux surfaces horizontales, longitudinales servant de surfaces d'appui à des éléments de couverture (20) du bassin de décantation (12).

## Description

La présente invention est relative à des perfectionnements apportés aux goulottes de reprise de liquides, notamment de l'eau décantée dans des appareils de décantation.

On sait (voir notamment FR-A-2598331) que dans les décanteurs pour installation de traitement d'eau, notamment les décanteurs lamellaires, l'eau décantée est reprise par un réseau de goulottes disposées au-dessus du niveau du liquide dans le bassin de décantation et présentant chacune une pluralité d'ouvertures, notamment en forme de créneaux, par lesquelles le liquide, après décantation, se déverse dans les goulottes, celles-ci débouchant dans un canal de recueil de liquide décanté.

A l'heure actuelle, pour des raisons de respect de l'environnement, il est nécessaire de recouvrir les bassins de décantation.

L'invention s'est donc fixé pour objectif :
1°/ d'utiliser les goulottes de reprise d'eau pour poser des éléments de couverture et,
2°/ de perfectionner les goulottes de reprise d'eau pour leur permettre de recevoir des éléments de couverture.

Les goulottes actuellement connues, réalisées en tôle ne fournissent pas une surface d'appui suffisamment résistante pour supporter des éléments de couverture, en conséquence, l'invention concerne une goulotte de reprise de liquide, notamment de liquide décanté pour appareil de décantation, caractérisée en ce que chacune de ses parois latérales longitudinales, au travers desquelles sont ménagées les ouvertures de déversement du liquide décanté, se prolonge par un pan rabattu perpendiculairement à ladite paroi, de manière à délimiter à la partie supérieure de ladite goulotte deux surfaces horizontales, longitudinales servant de surfaces d'appui à des éléments de couverture du bassin de décantation.

Selon un mode de réalisation préféré de l'invention, les surfaces d'appui délimitées par lesdits pans rabattus sont en regard l'une de l'autre.

Selon l'invention, lesdits éléments de couverture reposant sur les surfaces d'appui des goulottes peuvent être fixes ou montés articulés.

D'autres caractéristiques et avantages de cette invention ressortiront de la description faite ci-après en référence aux dessins annexés qui en illustrent un exemple de réalisation non limitatif. Sur les dessins :
- la figure 1 est une vue en section droite d'une goulotte perfectionnée selon l'invention,
- la figure 2 est une vue partielle en élévation latérale de la goulotte illustrée par la figure 1 et,
- la figure 3 est une vue à plus petite échelle, en élévation, d'un bassin de décantation muni de goulottes selon l'invention et d'éléments de couverture articulés.

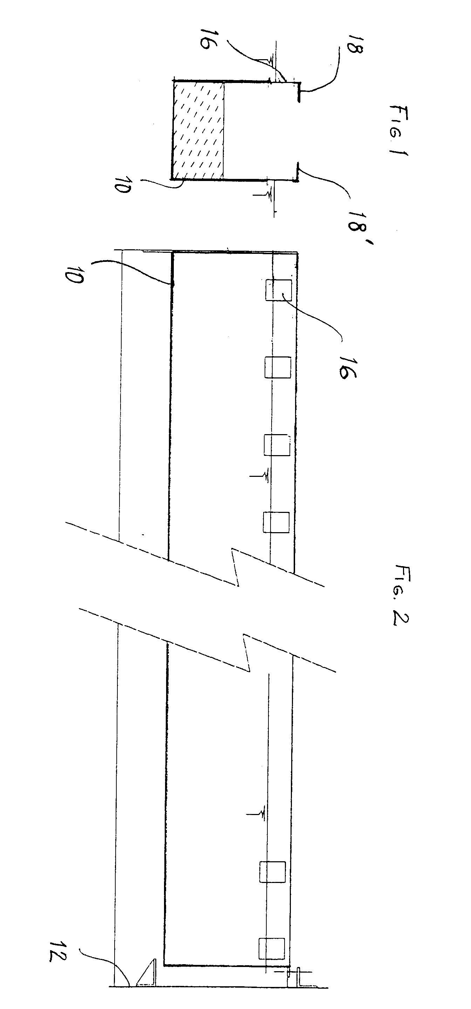

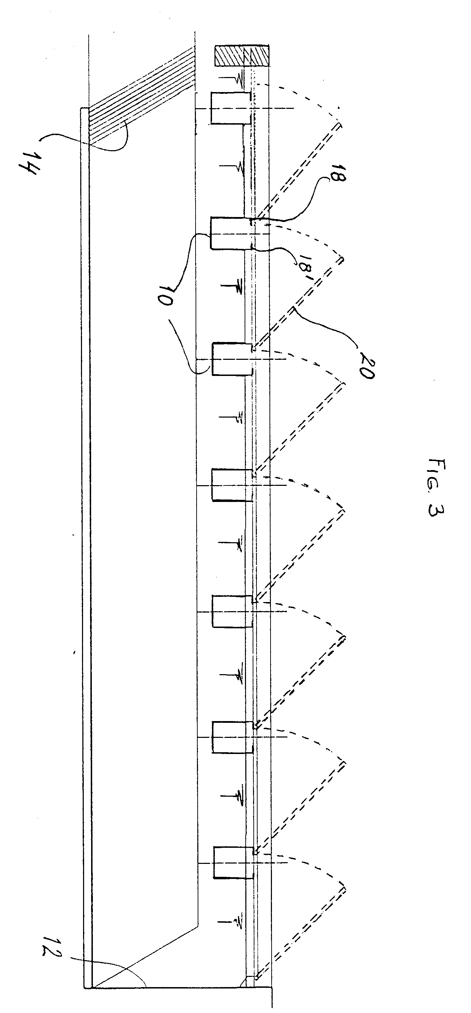

En se référant aux figures 1 et 2 on y voit une goulotte désignée dans son ensemble par la référence 10, du type réalisé en tôle, faisant partie d'un ensemble de goulottes de reprise d'eau décantée, montées à la partie supérieure d'un bassin de décantation 12. Chaque goulotte telle que 10, est munie d'une pluralité d'ouvertures telles que 16 pour le déversement dans la goulotte du liquide décanté dans le bassin 12.

Selon l'invention chacune des parois latérales longitudinales de la goulotte se prolonge par un pan rabattu à l'horizontale, 18-18' respectivement, définisssant une surface horizontale d'appui à la partie supérieure de la goulotte, destinée à supporter un élément de couverture 20 comme on le décrira ci-après en référence à la figure 3.

Dans l'exemple de réalisation illustré par les dessins, les parties supérieures des parois verticales de la goulotte sont rabattues l'une vers l'autre, les surfaces d'appui 18, 18' étant ainsi orientées l'une vers l'autre. Il ne s'agit là cependant que d'un exemple, on peut, sans sortir du cadre de l'invention, rabattre à l'horizontale, vers l'extérieur chacune des parties supérieures des parois longitudinales de la goulotte. Dans cette variante, les surfaces d'appui des éléments de couverture seraient orientées vers l'extérieur de la goulotte.

Sur la figure 3, on a representé partiellement un décanteur du type lamellaire dont le bassin de décantation 12 est muni d'un réseau de goulottes 10 selon l'invention, au-dessus des modules de décantation lamellaire 14. Dans cet exemple de réalisation on prévoit des éléments de couverture 20 du bassin 12, qui sont articulés sur les goulottes et qui prennent appui sur les surfaces telles que 18, 18'.

Il ressort de la lecture de la description faite ci-dessus que l'invention apporte une solution économique, facile à réaliser et d'entretien aisé, au problème de la couverture des bassins de décantation.

Il demeure bien entendu que cette invention n'est pas limitée aux exemples de réalisation décrits et représentés mais qu'elle en englobe toutes les variantes.

## Revendications

1. Goulotte de reprise de liquide, notamment d'eau décantée dans un appareil de décantation caractérisée en ce qu'elle est réalisée de manière à servir de support à des éléments de couverture (20).

2. Goulotte selon la revendication 1, caractérisée en ce que chacune de ses parois latérales longitudinales au travers desquelles sont ménagées les ouvertures (16) de déversement du liquide décanté, se prolonge par un pan (18, 18') rabattu perpendiculairement à ladite paroi, de manière à délimiter à la partie supérieure de ladite goulotte (10) deux surfaces horizontales, longitudinales servant de surfaces d'appui à des éléments de couverture (20) du bassin de décantation (12).

3. Goulotte selon la revendication 2, caractérisée en ce que lesdites surfaces d'appui (18, 18') sont disposées en regard l'une de l'autre, les pans les délimitant étant rabattus vers l'intérieur de la goulotte.

4. Goulotte selon la revendication 2, caractérisée en ce que les pans délimitant les surfaces d'appui sont rabattus respectivement vers l'extérieur de la goulotte.

5. Goulotte selon l'une quelconque des revendications 2 à 4 caractérisée en ce que les éléments de couverture du bassin de décantation (12) prenant appui sur lesdites surfaces rabattues (18, 18') sont montés articulés.
